# EUROPEAN PATENT SPECIFICATION

(11) **EP 4 372 872 B1**
(45) Date of publication and mention of the grant of the patent: **21.01.2026**
(21) Application number: 23767114.4
(22) Date of filing: 07.03.2023
(51) Int. Cl.: H01M 50/105, B65G 47/90, B25J 15/00, B25J 15/02

(54) **CELL PACKAGING DEVICE**
ZELLVERPACKUNGSVORRICHTUNG
DISPOSITIF D'ENCAPSULATION DE CELLULES

(30) Priority: 07.03.2022 KR 20220028709
(43) Date of publication of application: 22.05.2024
(73) Proprietor: LG Energy Solution, Ltd., Seoul 07335 (KR)
(72) Inventor: HWANG, Seung Jin, Daejeon 34122 (KR); BAEK, Ju Hwan, Daejeon 34122 (KR); LEE, Jin Soo, Daejeon 34122 (KR); LEE, Seung Bae, Daejeon 34122 (KR); CHOI, Won Seok, Daejeon 34122 (KR); HONG, Seok In, Daejeon 34122 (KR); OH, Duk Keun, Daejeon 34122 (KR)
(74) Representative: Goddar, Heinz J.
(86) International application number: PCT/KR2023/003067
(87) International publication number: WO 2023/172013

(56) References cited:
- CN-U- 207 134 439
- CN-U- 209 796 803
- KR-A- 20170 112 895
- KR-A- 20200 059 618
- KR-A- 20220 020 123
- US-A- 5 711 565
- US-A1- 2014 028 040

## Description

### Technical Field

The present application relates to a cell packaging device.

The present application claims the benefit of priority based on Korean Patent Application No. 10-2022-0028709 dated March 7, 2022.

### Background Art

A lithium secondary battery is generally manufactured by accommodating an electrode assembly (hereinafter, also referred to as a 'cell'), in which a positive electrode (cathode), a separator, and a negative electrode (anode) are laminated, in a pouch.

Particularly, in the case of the pouch-type cell among lithium secondary batteries, the manufacturing cost is inexpensive and it has a small weight, so that demand increases.

In the manufacturing process of the pouch-type cell, the cell in which the lamination of the positive electrode, the separator, and the negative electrode has been completed is transported to the pouch in a state of being sucked into a gripper in a vacuum suction manner, and the cell gripped in the gripper is inserted into the pouch.

However, when the cells are transported in the vacuum adsorption manner, there is a problem that the cells are damaged during the process of being inserted into the pouch, and there is a problem that high-weight cells cannot be transported in the vacuum adsorption manner. US 2014/0028040 A1 describes a robot system capable of purposely withdrawing a workpiece into a grip-type hand having fingers, and capable of sequentially taking out workpieces having various shapes and being randomly located from a container. The fingers have an angled/bent shape to achieve a form fit with or an engagement around the workpiece.

### Disclosure

### Technical Problem

It is a problem to be solved by the present invention to provide a cell packaging device capable of preventing cell damage in a process of inserting cells into a pouch.

### Technical Solution

In order to solve the above problem, a cell packing device according to independent claim 1 is provided. Particular embodiments of the invention are given by the dependent claims.

### Advantageous Effects

As described above, according to the cell packaging device related to at least one example of the present invention, in the process of inserting the cell into the pouch, it is possible to prevent the damage of the cell, and it is also possible to transport a high-weight cell to the pouch.

### Description of Drawings

Figure 1 is a perspective diagram schematically showing a cell packaging device according to one example of the present invention.
Figure 2 is an essential part perspective diagram showing the cell grip unit shown in Figure 1.
Figure 3 is a perspective diagram showing the first member of the cell grip unit shown in Figure 2.
Figures 4 to 7 are schematic diagrams for explaining one operating state of a cell packaging device according to one example of the present invention.

### Mode for Invention

Hereinafter, a cell packaging device according to one example of the present invention will be described in detail with reference to the drawings.

In addition, regardless of the reference numerals, the same or corresponding components are given by the same or similar reference numerals, duplicate descriptions thereof will be omitted, and for convenience of explanation, the size and shape of each component member as shown can be exaggerated or reduced.

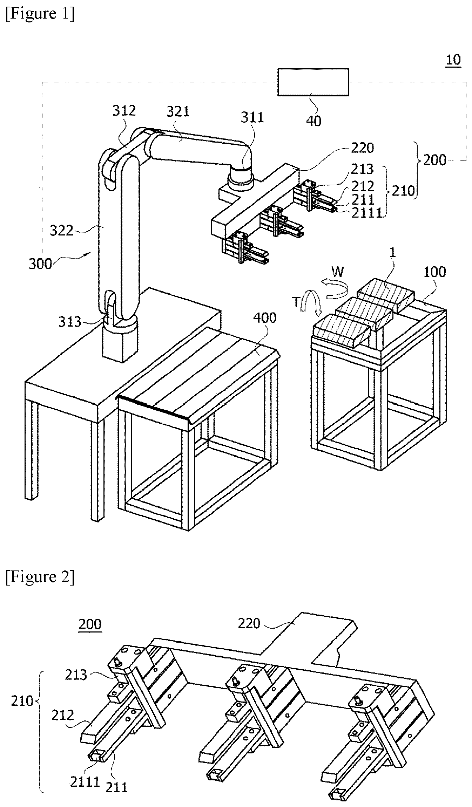

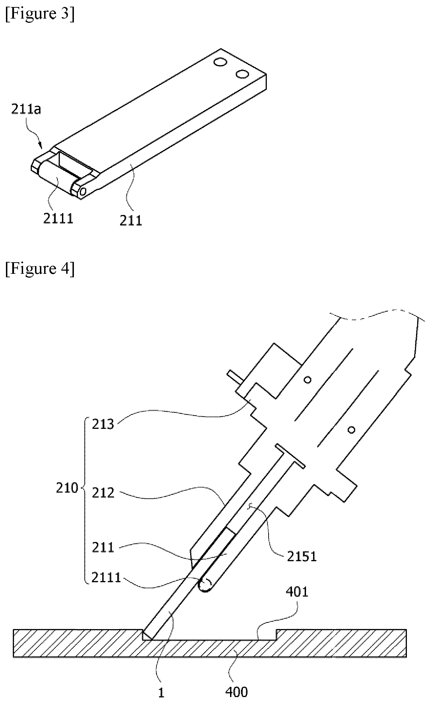

Figure 1 is a perspective diagram schematically showing a cell packaging device (10) according to one example of the present invention, Figure 2 is an essential part perspective diagram showing the cell grip unit (200) shown in Figure 1, and Figure 3 is a perspective diagram showing the first member (211) of the cell grip unit shown in Figure 2.

Figures 4 to 7 are schematic diagrams for explaining one operating state of a cell packaging device according to one example of the present invention.

Referring to Figure 1, the cell packaging device (10) related to one example of the present invention comprises a cell grip unit (200) and a transport part (300).

The cell packaging device (10) comprises a cell grip unit (200) comprising a cell grip part (210) including a first member (211) provided with a roller (2111), a second member (212) disposed opposite to the first member (211) at a predetermined interval to provide an insertion space (2151) of a cell (1) and a gap adjusting part (213) adjusting the gap between the first member (111) and the second member (212), and a transport part (300) transporting the cell grip unit (200).

Also, the cell grip unit (200) may comprise a support part (220) connected to the transfer part (300). In addition, a plurality of cell grip parts (210) may be provided at predetermined intervals on the support part (220).

The cell grip unit (200) grips the cell (1) placed on a cell supply part (100), transports it to a pouch (400), and then performs a function that the cell (1) is inserted into an accommodating part (401) of the pouch (400).

The cell grip part (210) comprises a first member (211), a second member (212), and a gap adjusting part (213). The cell grip part (210) is a part directly holding the cell (1), in which a plurality of cell grip parts may be provided on the support part (220).

In addition, the support part (220) supports the cell grip part (210), and as one example, the support part (220) may be connected to the gap adjusting part (213).

The first member (211) is a member on which the cell (1) is seated, which performs a function of supporting the cell (1). The first member (211) is provided with one or more rollers (2111), where the rollers (211) may be idle-rotatably mounted on the first member (211).

The roller (2111) performs a function of minimizing impacts applied to the cell (1) when the cell (1) is gripped or released, which may be disposed at the entry end (2111) where the cell (1) enters the insertion space (2151). At this time, in the process of inserting the cell (1) into the cell grip unit (200) or discharging the cell (1) from the cell grip unit (200), the roller (2111) may contact the cell (1), and be rotated. Accordingly, it is possible to minimize damage applied to the cell (1) when the cell is gripped or released.

Referring to Figure 3, the first member (211) has a plate shape, where one end of the first member (211) is connected in a fixed state to the lower part of the gap adjusting part (213), and the roller (2111) is provided at the other end located on the opposite side of the one end.

The second member (212) is a member for providing an insertion space of the cell (1), which is provided to grip or release the cell (1) seated on the first member (211). To this end, the second member (212) is disposed opposite to the first member (211) at a predetermined interval.

The second member (212) has a plate shape, where one end is connected to an upper portion of the gap adjusting part (213).

The gap adjusting part (213) is a part adjusting the gap between the first member (211) and the second member (212), which is provided to adjust a size of the cell insertion space (2151). The gap adjusting part (213) is connected to each of the first member (211) and the second member (212).

As one example, the gap adjusting part (213) may be provided to adjust the gap between the first member and the second member by moving the second member (212). The gap adjusting part (213) may comprise a driving source, such as a motor, for moving the second member (212), and a guide rail guiding the movement of the second member (212).

In addition, the gap adjusting part (213) may be provided to move the second member (212) in a direction closer to or farther from the first member (211). Specifically, when the cell (1) on the cell supply part (100) is gripped, the gap adjusting part (213) may move the second member (212) toward the first member (211) to narrow the gap. Contrary to this, when the grip of the cell (1) is released on the pouch (400), the gap adjusting part (213) may move the second member (212) away from the first member (211).

The cell (1) is an electrode assembly in which a positive electrode (cathode), a separator, and a negative electrode (anode) are laminated.

Referring to Figure 1, the cell (1) may be supplied from the cell supply part (100). In order to insert the cell (1) into the pouch (400), the transport part (300) performs a function of transporting the cell grip unit (200) toward the cell supply part (100) or the pouch (400).

Specifically, in order to grip the cell (1) on the cell supply part (100), the transport part (300) may transport the cell grip unit (200) to the cell supply part (100), and in order to insert the cell (1) into the pouch, it may transport the cell grip unit (200) to the pouch (400).

Referring to Figure 1, the transport part (300) may be provided to rotate the cell grip unit (200) along the thickness direction (T) or width direction (W) of the cell (1) during the transport process.

In this specification, the term "rotation along the thickness direction of the cell" means rotation along the thickness direction using the direction perpendicular to the thickness direction of the cell as a rotation axis. Also, in this specification, the term "rotation along the width direction of the cell" means rotation along the width direction using the direction perpendicular to the width direction of the cell as an axis.

The transport part (300) may adjust the angle of the cell (1) relative to the accommodating part (401) of the pouch when the cell (1) is inserted into the pouch by rotating the cell grip unit (200).

As one example, the transport part (300) may comprise a plurality of rotation parts provided to rotate in the thickness direction (T) and the width direction (W) of the cell, respectively, and links connecting adjacent rotation parts. At this time, the number of rotation parts, the rotation angle range, and the length of the link, and the like may be adjusted according to the working environment.

Referring to Figure 1, the plurality of rotation parts may comprise a first rotation part (311), a second rotation part (312) and a third rotation part (313). In addition, the plurality of links may comprise a first link (321) connecting the first rotation part (311) and the second rotation part (312), and a second link (322) connecting the second rotation part (312) and the third rotation part (313).

The first rotating part (311) is connected to the cell grip unit (200), which may be provided to rotate along one or more directions selected from the thickness direction and the width direction of the cell.

Also, the second rotation part (312) is connected to the first link (321) and is a part for controlling the movable range of the first link, which may be provided to rotate along the thickness direction of the cell.

**In** addition, the third rotation part (313) is a part for controlling the movable range of the second link (322), which may be provided to rotate along one or more directions selected from the thickness direction and the width direction of the cell. Furthermore, in the third rotation part (313), the other end located in the opposite direction to one end to which the second link (322) is connected may be connected to the installation surface on which the device is installed.

Referring to Figures 4 to 7, the pouch (400) comprises an accommodating part (401) in which the cell (1) is seated, where the accommodating part (401) may be formed as a recessed portion through a forming process, and the like. The cell grip unit (200) grips the cell (1) on the cell supply part (100) to transport the cell (1) to the pouch (400) in a gripped state, and then releases the grip of the cell (1) on the pouch (400), thereby allowing the cell (1) to be inserted into the accommodating part (401) of the pouch (400).

**In** addition, the cell packaging device (10) may comprise a control part (40) controlling the cell grip unit (200) and the transport part (300).

The control part (40) is a part controlling the operation of the cell grip unit (200) and the transport part (300), which is electrically connected to the cell grip unit (200) and the transport part (300).

Describing the process of gripping the cell (1), the control part (40) may transport the cell grip unit (200) so that the cell (1) on the cell supply part (100) is positioned in the insertion space (2151) between the first member (211) and the second member (212).

**In** addition, the control part (40) may be provided to narrow the gap between the first member (211) and the second member (212) after the cell (1) is seated on the first member (211). That is, the control part (40) may control the gap adjusting part (213) to move the second member (212) toward the first member (211).

At this time, the control part (40) may transport the cell grip unit (200) so that the cell (1) on the cell supply part (100) is seated on the first member (211) while contacting the roller (2111). As one example, when the transport part (300) transports the cell grip unit (200) to the cell (1) on the cell supply part (100), the first link (321) and the second link (322) may rotate along one or more directions selected from the thickness direction and the width direction of the cell. Through such a process, the entry angle and direction of the cell grip unit (200) into the cell (1) loaded on the cell supply part (100) may be adjusted.

Hereinafter, a process of releasing the grip of the cell (1) on the pouch (400) by the cell grip unit (200) will be described.

Referring to Figure 4, the control part (40) may transport the cell grip unit (200) so that a partial region of the cell (1) contacts the pouch (400) in a state where the cell (1) is gripped by the cell grip unit (200).

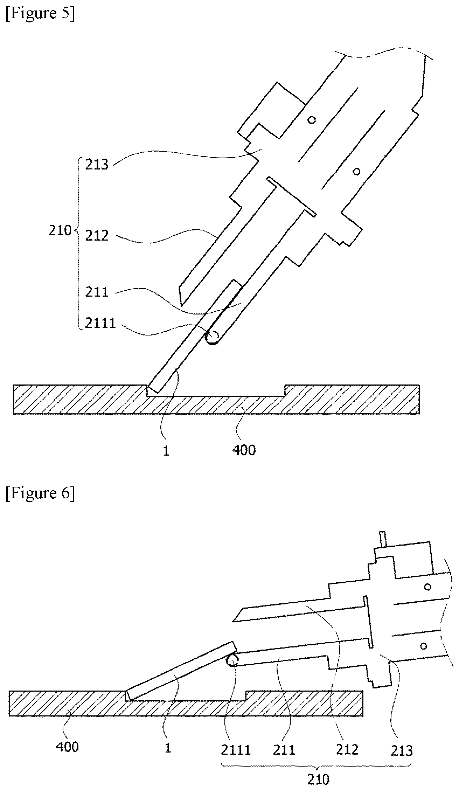

**In** addition, referring to Figures 5 to 7, the control part (40) may be provided so that the grip of the cell (1) is released by widening the gap between the first member (211) and the second member (212) in a state where a partial region of the cell (1) contacts the pouch (400). Furthermore, the control part (40) may transport the cell grip unit (200) so that when the cell grip is released, the cell (1) is inserted into the pouch (400) while contacting the roller (2111).

Referring to Figure 5, the control part (40) may control such that in a state where the cell (1) is gripped, the grip of the cell is released by moving the second member (212) so that the gap between the first member (211) and the second member (212) becomes farther apart, and then, the cell (1) is inserted into the accommodating part (401) of the pouch (400).

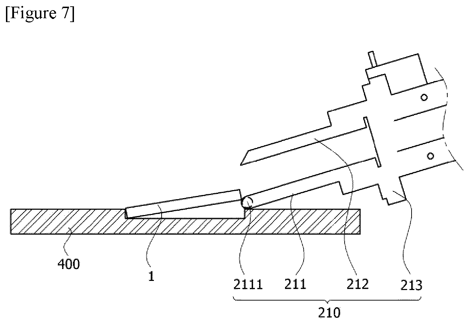

Then, referring to Figure 6, the control part (40) may tilt the cell grip unit (200) so that the second member (220) is approximately parallel to the pouch (400). Then, referring to Figure 7, the control part (40) may adjust the position and direction of the cell grip unit (200) so that the cell (1) contacts the roller (2111) in the process of being transferred from the cell grip unit (200) to the pouch (400).

The cell packaging method may comprise a first transport step, a grip step, a second transport step, and an insertion step.

The first transport step is a step of transporting the cell grip unit (200) to the cell on the cell supply part through the transport part (300). The first transport step may be performed by transporting the cell grip unit (200) to the cell (1) using the transport part so that the cell (1) is positioned between the first member (211) and the second member (212).

The grip step is a step of gripping the cell with the cell grip unit (200), which is performed by gripping the cell with the cell grip unit. The grip step may be performed by moving the second member (212) to narrow the gap between the first member (211) and the second member (212) with the gap adjusting part (213) after the cell is seated on the first member (211).

The second transport step is a step of transporting the cell gripped in the grip step to the pouch (400), which is performed by transporting the cell grip unit (200), in which the cell is gripped, toward the pouch using the transport part (300).

The insertion step is a step for inserting the cell (1) into the pouch (400). The inserting step may be performed by transporting the cell to the accommodating part of the pouch, and then moving the second member so that the gap between the first member and the second member becomes farther apart to release the grip of the cell.

The preferred examples of the present invention as described above have been disclosed for illustrative purposes. The scope of the present invention is defined by the appended claims.

### Industrial Applicability

According to the cell packaging device related to at least one example of the present invention, in the process of inserting the cell into the pouch, it is possible to prevent the damage of the cell, and it is also possible to transport a high-weight cell to the pouch.

## Claims

1. A cell packaging device (10) comprising:
a cell grip unit (200) comprising
a cell grip part (210) including
a plate-shaped first member (211) provided with a roller (2111),
a plate-shaped second member (212) disposed opposite to the first member (211) at a predetermined interval to provide an insertion space (2151) of a cell (1) for a pouch (400), and
a gap adjusting part (213) configured to adjust a gap between the first member (211) and the second member (212),
one end of the second member (212) being connected to an upper portion of the gap adjusting part (213), and
one end of the first member (211) being connected in a fixed state to a lower part of the gap adjusting part (213) and the roller (2111) being provided at the other end of the first member (211) located on the opposite side of the one end; and
a transport part (300) configured to transport the cell grip unit (200).

2. The cell packaging device (10) according to claim 1, wherein the gap adjusting part (213) is further configured to adjust the gap by moving the second member (212).

3. The cell packaging device (10) according to claim 1, wherein the roller (2111) is disposed at an entry end where the cell (1) enters the insertion space (2151).

4. The cell packaging device (10) according to claim 1, wherein the transport part (300) is further configured to rotate the cell grip unit (200) along a thickness direction (T) or a width direction (W) of the cell (1) during a transport process.

5. The cell packaging device (10) according to claim 1, wherein the transport part (300) comprises:
a plurality of rotation parts (311, 312, 313) configured to rotate along the thickness direction (T) and the width direction (W) of the cell (1), respectively; and
links (321, 322) connecting the adjacent rotation parts (311, 312, 313).

6. The cell packaging device (10) according to claim 1, further comprising a control part (40) controlling the cell grip unit (200) and the transport part (300), wherein
the control part (40) is configured to transport the cell grip unit (200) so that the cell (1) on a cell supply part (100) is positioned in the insertion space (2151) between the first member (211) and the second member (212).

7. The cell packaging device (10) according to claim 6, wherein
the control part (40) is further configured to narrow the gap between the first member (211) and the second member (212) after the cell (1) is seated on the first member (211).

8. The cell packaging device (10) according to claim 7, wherein
the control part (40) is further configured to transport the cell grip unit (200) so that the cell (1) on the cell supply part (100) is seated on the first member (211) while contacting the roller (2111).

9. The cell packaging device (10) according to claim 7, wherein the control part (40) is further configured to transport the cell grip unit (200) so that a partial region of the cell (1) contacts a pouch (400) in a state where the cell (1) is gripped.

10. The cell packaging device (10) according to claim 9, wherein the control part (40) is further configured to release the grip of the cell (1) by widening the gap between the first member (211) and the second member (212) in a state where a partial region of the cell (1) contacts the pouch (400).

11. The cell packaging device (10) according to claim 10, wherein the control part (40) is further configured to transport the cell grip unit (200) so that when the grip of the cell (1) is released, the cell (1) is inserted into the pouch (400) while contacting the roller (2111).

12. The cell packaging device (10) according to claim 1, wherein
the roller (2111) is idle-rotatably mounted to the first member (211).

13. The cell packaging device (10) according to claim 2, wherein
the gap adjusting part (213) is further configured to move the second member (212) in a direction closer to or farther from the first member (211).

14. The cell packaging device (10) according to claim 1, wherein
the cell grip unit (200) comprises a support part (220) connected to the transport part (300), and
a plurality of cell grip parts (210) is provided on the support part (220) at predetermined intervals.

## Patentansprüche

1. Zellenpackvorrichtung (10), umfassend:
eine Zellengreifeinheit (200), umfassend
ein Zellengreifteil (210), umfassend
ein plattenförmiges erstes Element (211), das mit einer Rolle (2111) versehen ist,
ein plattenförmiges zweites Element (212), das in einem vorbestimmten Abstand dem ersten Element (211) gegenüberliegend angeordnet ist, um einen Einführraum (2151) einer Zelle (1) für einen Beutel (400) bereitzustellen, und
ein Spalteinstellteil (213), das dazu eingerichtet ist, einen Spalt zwischen dem ersten Element (211) und dem zweiten Element (212) einzustellen,
wobei ein Ende des zweiten Elements (212) mit einem oberen Abschnitt des Spalteinstellteils (213) verbunden ist, und
wobei ein Ende des ersten Elements (211) in einem fixierten Zustand mit einem unteren Teil des Spalteinstellteils (213) verbunden ist und die Rolle (2111) an dem anderen Ende des ersten Elements (211) bereitgestellt ist, das sich auf der gegenüberliegenden Seite des einen Endes befindet; und
ein Transportteil (300), das dazu eingerichtet ist, die Zellengreifeinheit (200) zu transportieren.

2. Zellenpackvorrichtung (10) nach Anspruch 1, wobei das Spalteinstellteil (213) ferner dazu eingerichtet ist, den Spalt durch Bewegen des zweiten Elements (212) einzustellen.

3. Zellenpackvorrichtung (10) nach Anspruch 1, wobei die Rolle (2111) an einem Eintrittsende angeordnet ist, an dem die Zelle (1) in den Einführraum (2151) eintritt.

4. Zellenpackvorrichtung (10) nach Anspruch 1, wobei das Transportteil (300) ferner dazu eingerichtet ist, die Zellengreifeinheit (200) während eines Transportprozesses entlang einer Dickenrichtung (T) oder einer Breitenrichtung (W) der Zelle (1) zu drehen.

5. Zellenpackvorrichtung (10) nach Anspruch 1, wobei das Transportteil (300) umfasst:
eine Mehrzahl von Drehteilen (311, 312, 313), die dazu eingerichtet sind, sich jeweils entlang der Dickenrichtung (T) und der Breitenrichtung (W) der Zelle (1) zu drehen; und
Verbindungsstücke (321, 322), die die benachbarten Drehteile (311, 312, 313) verbinden.

6. Zellenpackvorrichtung (10) nach Anspruch 1, ferner umfassend ein Steuerteil (40), das die Zellengreifeinheit (200) und das Transportteil (300) steuert, wobei
das Steuerteil (40) dazu eingerichtet ist, die Zellengreifeinheit (200) so zu transportieren, dass die Zelle (1) auf einem Zellenzufuhrteil (100) in dem Einführraum (2151) zwischen dem ersten Element (211) und dem zweiten Element (212) positioniert wird.

7. Zellenpackvorrichtung (10) nach Anspruch 6, wobei
das Steuerteil (40) ferner dazu eingerichtet ist, den Spalt zwischen dem ersten Element (211) und dem zweiten Element (212) zu verengen, nachdem die Zelle (1) auf dem ersten Element (211) sitzt.

8. Zellenpackvorrichtung (10) nach Anspruch 7, wobei
das Steuerteil (40) ferner dazu eingerichtet ist, die Zellengreifeinheit (200) so zu transportieren, dass die Zelle (1) auf dem Zellenzufuhrteil (100) auf dem ersten Element (211) sitzt, während sie die Rolle (2111) berührt.

9. Zellenpackvorrichtung (10) nach Anspruch 7, wobei das Steuerteil (40) ferner dazu eingerichtet ist, die Zellengreifeinheit (200) so zu transportieren, dass ein Teilbereich der Zelle (1) einen Beutel (400) in einem Zustand berührt, in dem die Zelle (1) gegriffen ist.

10. Zellenpackvorrichtung (10) nach Anspruch 9, wobei das Steuerteil (40) ferner dazu eingerichtet ist, den Griff der Zelle (1) durch Aufweiten des Spalts zwischen dem ersten Element (211) und dem zweiten Element (212) in einem Zustand freizugeben, in dem ein Teilbereich der Zelle (1) den Beutel (400) berührt.

11. Zellenpackvorrichtung (10) nach Anspruch 10, wobei das Steuerteil (40) ferner dazu eingerichtet ist, die Zellengreifeinheit (200) so zu transportieren, dass, wenn der Griff der Zelle (1) freigegeben wird, die Zelle (1) in den Beutel (400) eingeführt wird, während sie die Rolle (2111) berührt.

12. Zellenpackvorrichtung (10) nach Anspruch 1, wobei
die Rolle (2111) freilaufend drehbar an dem ersten Element (211) angebracht ist.

13. Zellenpackvorrichtung (10) nach Anspruch 2, wobei
das Spalteinstellteil (213) ferner dazu eingerichtet ist, das zweite Element (212) in einer Richtung näher zu oder weiter weg von dem ersten Element (211) zu bewegen.

14. Zellenpackvorrichtung (10) nach Anspruch 1, wobei
die Zellengreifeinheit (200) ein Stützteil (220) umfasst, das mit dem Transportteil (300) verbunden ist, und
eine Mehrzahl von Zellengreifteilen (210) an dem Stützteil (220) in vorbestimmten Abständen bereitgestellt ist.

## Revendications

1. Dispositif de conditionnement de cellule (10) comprenant :
un dispositif de préhension de cellule (200) comprenant
un élément de préhension de cellule (210) comportant
un premier élément en forme de plaque (211) muni d'un rouleau (2111),
un deuxième élément en forme de plaque (212) disposé face au premier élément (211) à un intervalle prédéterminé pour fournir un espace d'insertion (2151) d'une cellule (1) pour une poche (400), et
un dispositif de réglage de l'écart (213) configuré pour ajuster un écart entre le premier élément (211) et le deuxième élément (212),
un bout du deuxième élément (212) étant relié à une partie supérieure du dispositif de réglage de l'écart (213), et
un bout du premier élément (211) étant relié, à l'état fixe, à une partie inférieure du dispositif de réglage de l'écart (213), et le rouleau (2111) étant agencé à l'autre bout du premier élément (211) situé du côté opposé à l'un bout ; et
un dispositif de transport (300) configurée pour transporter le dispositif de préhension de cellule (200).

2. Dispositif de conditionnement de cellule (10) selon la revendication 1, le dispositif de réglage de l'écart (213) étant configuré en outre pour ajuster l'écart en déplaçant le deuxième élément (212).

3. Dispositif de conditionnement de cellule (10) selon la revendication 1, le rouleau (2111) étant disposé à une extrémité d'entrée où la cellule (1) pénètre dans l'espace d'insertion (2151).

4. Dispositif de conditionnement de cellule (10) selon la revendication 1, le dispositif de transport (300) étant configuré en outre pour effectuer une rotation du dispositif de préhension de cellule (200) dans le sens d'une épaisseur (T) ou dans le sens d'une largeur (W) de la cellule (1) au cours d'un processus de transport.

5. Dispositif de conditionnement de cellule (10) selon la revendication 1, le dispositif de transport (300) comprenant :
une pluralité de pièces de rotation (311, 312, 313) configurées pour tourner dans le sens de l'épaisseur (T) et dans le sens de la largeur (W) de la cellule (1), respectivement ; et
des liens (321, 322) reliant les parties en rotation adjacentes (311, 312, 313).

6. Dispositif de conditionnement de cellule (10) selon la revendication 1, comprenant en outre un module de commande (40) commandant le dispositif de préhension de cellule (200) et le dispositif de transport (300),
le module de commande (40) étant configuré pour transporter le dispositif de préhension de cellule (200) de sorte que la cellule (1) sur un élément de distribution de cellule (100) soit positionnée dans l'espace d'insertion (2151) entre le premier élément (211) et le deuxième élément (212).

7. Dispositif de conditionnement de cellule (10) selon la revendication 6,
le module de commande (40) étant configuré en outre pour réduire l'espace entre le premier élément (211) et le deuxième élément (212) après l'installation de la cellule (1) sur le premier élément (211).

8. Dispositif de conditionnement de cellule (10) selon la revendication 7,
le module de commande (40) étant configuré en outre pour transporter le dispositif de préhension de cellule (200) de sorte que la cellule (1) sur l'élément de distribution de cellule (100) soit installée sur le premier élément (211) tout en étant au contact du rouleau (2111).

9. Dispositif de conditionnement de cellule (10) selon la revendication 7, le module de commande (40) étant configuré en outre pour transporter le dispositif de préhension de cellule (200) de sorte qu'une région partielle de la cellule (1) se place au contact d'une poche (400) dans un état où la cellule (1) est saisie.

10. Dispositif de conditionnement de cellule (10) selon la revendication 9, le module de commande (40) étant configuré en outre pour relâcher la prise de la cellule (1) en élargissant l'écart entre le premier élément (211) et le deuxième élément (212) dans un état où une région partielle de la cellule (1) se place au contact de la poche (400).

11. Dispositif de conditionnement de cellule (10) selon la revendication 10, le module de commande (40) étant configuré en outre pour transporter le dispositif de préhension de la cellule (200) de sorte que lorsque la prise de la cellule (1) est relâchée, la cellule (1) soit insérée dans la poche (400) tout en se plaçant au contact du rouleau (2111).

12. Dispositif de conditionnement de cellule (10) selon la revendication 1,
le rouleau (2111) étant monté en rotation au ralenti sur le premier élément (211).

13. Dispositif de conditionnement de cellule (10) selon la revendication 2,
le dispositif de réglage de l'écart (213) étant configuré en outre pour déplacer le deuxième élément (212) dans une direction plus proche ou plus éloignée du premier élément (211).

14. Dispositif de conditionnement de cellule (10) selon la revendication 1,
le dispositif de préhension de cellule (200) comprenant une partie de support (220) reliée au dispositif de transport (300), et
une pluralité de dispositifs de préhension de cellule (210) étant agencée sur la partie de support (220) à des intervalles prédéterminés.
